# EUROPÄISCHE PATENTSCHRIFT

(11) **EP 3 308 978 B1**
(45) Veröffentlichungstag und Bekanntmachung des Hinweises auf die Patenterteilung: **16.09.2020**
(21) Anmeldenummer: 17181603.6
(22) Anmeldetag: 17.07.2017
(51) Int. Cl.: B60C 11/03, B60C 11/11, B60C 11/12, B60C 11/13

(54) **FAHRZEUGLUFTREIFEN**
PNEUMATIC TYRES FOR A VEHICLE
PNEUMATIQUES DE VÉHICULE

(30) Priorität: 17.10.2016 DE 102016220187
(43) Veröffentlichungstag der Anmeldung: 18.04.2018
(73) Patentinhaber: Continental Reifen Deutschland GmbH, 30165 Hannover (DE)
(72) Erfinder: Jabri, Mohamed Aymen, 30167 Hannover (DE)
(74) Vertreter: Finger, Karsten

(56) Entgegenhaltungen:
- EP-A1- 2 905 125
- EP-A1- 3 446 888
- CA-A- 1 157 103
- DE-A1-102012 105 120
- JP-A- 2005 193 702
- US-A- 6 151 959
- US-A1- 2001 032 691
- US-A1- 2013 263 984

## Beschreibung

Die vorliegende Erfindung bezieht sich auf einen Luftreifen mit einem profilierten Laufstreifen und mit radial erhabenen, voneinander getrennten Profilblockelementen.

Die Erfindung geht aus von einem Luftreifen mit einem profilierten Laufstreifen mit radial erhabenen, voneinander getrennten Profilblockelementen. Dabei weist mindestens ein Profilblockelement an einer Seitenfläche des Profilblockelementes mindestens eine Aussparung auf. Dabei ist die Aussparung zur Beeinflussung mechanischer Eigenschaften des mindestens einen Profilblockelementes vorgesehen.

Bei den mechanischen Eigenschaften des mindestens einen Profilblockelementes handelt es sich insbesondere um ein Kompressionsmodul oder eine Elastizität des mindestens einen Profilblockelementes.

Die Seitenfläche des Profilblockelementes erstreckt sich schräg oder senkrecht zu einer Fahrbahnkontaktfläche des Profilblockelements. Die Fahrbahnkontaktfläche ist die Oberfläche des Profilblockelementes, die bei einem regulären Abrollen des Luftreifens in unmittelbarem Kontakt mit der Fahrbahn steht, auf der der Luftreifen abrollt.
Die Seitenfläche des Profilblockelementes erstreckt sich insbesondere radial von dem Laufstreifen wegweisend und rechtwinklig zu einer Rotationsachse des Luftreifens.

Aus dem Stand der Technik sind Luftreifen bekannt, wobei die Luftreifen Profilblockelemente aufweisen. Dabei weisen die Profilblockelemente beispielsweise Aussparungen an den Seitenflächen auf.

So wird in der DE 602 13 445 T2 eine Laufstreifen für Luftreifen offenbart, wobei der Laufstreifen Reliefelemente aufweist, die mindestens eine Seitenfläche besitzen. Dabei weist mindestens ein Reliefelement seitliche Öffnungen auf, wobei die seitlichen Öffnungen durch das Reliefelement hindurch gehen.

### Luftreifen mit Laufstreifen sind ferner aus der US 6,151,959 A, aus der

US 2013/263 984 A1**,** aus **der** DE 10 2012 105 120 A1, und aus der EP 3 446 888 A1, wobei Letzteres Dokument unter Art. 54 (3) EPÜ fällt, bekannt.

Die aus dem Stand der Technik bekannten Verfahren zur Erzeugung der Aussparungen können hinsichtlich einer Ausgestaltung der Aussparung begrenzt sein. Insbesondere sind die aus dem Stand der Technik bekannten Verfahren hinsichtlich der erzeugten Abmessungen der Aussparungen begrenzt. Hintergrund dieser Begrenzung ist, dass mittels der aus dem Stand der Technik bekannten, lediglich mechanisch durchgeführten Verfahren zur Erzeugung von Aussparungen nur bestimmte minimale Schnitte oder minimale Abtragungen an der Seitenfläche eines Profilblockelements vorgenommen werden können. Durch den Umstand, dass nur bestimmte minimale Schnitte oder minimale Abtragungen an der Seitenfläche eines Profilblockelements vorgenommen werden können, kann die Möglichkeit begrenzt sein, bestimmte, gegebenenfalls komplexe Formen eines Querschnitts der Aussparung zu erzeugen.
Eine Wirkung der Aussparung auf das Profilblockelement kann insbesondere von der Art der Aussparung abhängen. Die Wirkung, die die Aussparung auf das Profilblockelement ausüben soll, betrifft beispielsweise die Elastizität oder die Kompressibilität des Profilblockelements. Je vielfältiger die Möglichkeiten der Gestaltung der Aussparung sind, auf desto vielfältigere Weise kann auf die Eigenschaften des Profilblockelements Einfluss genommen werden. Da die Möglichkeiten zur Ausbildung der Geometrie und der Abmessungen gemäß dem Stand der Technik begrenzt sind, können somit auch die Möglichkeiten der Einflussnahme auf die Eigenschaften des Profilblockelementes begrenzt sein. Dies kann dazu führen, dass der Einsatz der Profilblockelemente nicht optimal gestaltet ist.

Der Erfindung liegt daher die Aufgabe zugrunde, verbesserte Profilblockelemente bereitzustellen.

Diese Aufgabe wird erfindungsgemäss nach Patentanspruch 1 gelöst.

Durch den erfindungsgemäßen Umstand, wonach die mindestens eine Aussparung mittels eines Lasers hergestellt worden ist, können Aussparungen an den Seitenflächen der Profilblockelemente erzeugt werden, bei denen eine, verglichen mit dem Stand der Technik, höhere Zahl verschiedener geometrischer Formen möglich ist. Darüber hinaus kann mittels eines Lasers eine Aussparung erzeugt werden, die im Vergleich zu mechanisch erzeugten Aussparungen kleinere Abmessungen aufweist. Durch den Umstand, dass die Aussparungen eine höhere Zahl verschiedener Geometrien aufweisen können und darüber hinaus kleinere Abmessungen als im Stand der Technik aufweisen können, kann vielfältiger und gezielter Einfluss auf die mechanischen Eigenschaften eines Profilblockelementes genommen werden. Der gezielte Einfluss kann beispielsweise dadurch erreicht werden, dass die Aussparungen nur in bestimmten Bereichen der Seitenfläche des Profilblockelements erzeugt werden, dies ist möglich, da die Aussparungen kleinere Abmessungen aufweisen, als es bislang aus dem Stand der Technik bekannt ist. Durch die vielfältige und gezielte Einflussnahme auf die Eigenschaften eines Profilblockelementes kann der Einsatz des Profilblockelementes selbst verbessert werden. Das Profilblockelement kann insbesondere zuverlässig für bestimmte Fahrbahngegebenheiten, beispielsweise eine vereiste Fahrbahn, ausgelegt werden. Insgesamt wird somit ein verbessertes Profilblockelement bereitgestellt. Zu den weiteren Eigenschaften des Profilblockelements gehört beispielsweise ein Rollwiderstand des Laufstreifens in Verbindung mit dem Profilblockelement.

Weitere vorteilhafte Ausgestaltungsformen der Erfindung sind Gegenstand der Unteransprüche.

Gemäß einer vorzugsweisen Ausgestaltungsform der Erfindung ist die mindestens eine Aussparung mittels eines gepulsten Lasers hergestellt worden.

Durch den erfindungsgemäßen Umstand, wonach die mindestens eine Aussparung mittels eines gepulsten Lasers hergestellt worden ist, können die Mengen des Kautschuks, die mit dem Laser aus dem Luftreifen herausgeschnitten werden, und damit die Abmessungen einer Aussparung sehr genau eingestellt werden. Darüber hinaus kann eine Vielzahl geometrischer Formen der Aussparungen erzeugt werden. Hintergrund ist, dass mit einem gepulsten Laser die zum Herausschneiden von Material aus dem Profilblockelement verwendete Energie sowie die zeitliche Dauer dieses Herausschneidens exakt eingestellt werden kann.

Gemäß der Erfindung beträgt eine minimale Ausdehnung einer Fläche eines Querschnitts der mindestens einen Aussparung 0,05 mm bis 0,1 mm.
Dabei handelt es sich bei dem Querschnitt insbesondere um den Querschnitt einer Aussparung, der orthogonal zu einer Längsausrichtung der Aussparung durch das Profilblockelement ausgerichtet ist. Die Längsausrichtung entspricht insbesondere der Ausrichtung der Aussparung in dem Profilblockelement, die parallel oder orthogonal zu einer Umlaufrichtung des Luftreifens und jeweils rechtwinklig zu seiner Rotationsachse liegt.

Durch den erfindungsgemäßen Umstand, wonach die eine minimale Ausdehnung einer Fläche eines Querschnitts, der mindestens einen Aussparung 0,05 mm bis 0,1 mm beträgt, können Aussparungen bereitgestellt werden, bei denen nur sehr geringe Mengen des Profilblockelementes herausgeschnitten worden ist. Zugleich können insbesondere auch komplexe geometrische Formen hergestellt werden. Dadurch, dass nur sehr geringe Mengen herausgeschnitten werden kann ein Einfluss auf die mechanischen Eigenschaften des Profilblockelements genommen werden, ohne, dass es zu einer Verschlechterung des Profilblockelements aufgrund einer zu großen weggeschnittenen Menge kommen kann. Die Einflussnahme auf das Profilblockelement ist dann durch die Position der Aussparung im Profilblockelement und die Geometrie der Aussparung hinreichend sichergestellt.

Gemäß einer nächsten vorzugsweisen Ausgestaltungsform der Erfindung variiert der Querschnitt der mindestens einen Aussparung im Profilblockelement. Durch die Variation des Querschnitts der mindestens einen Aussparung im Profilblockelement kann die Steifigkeit innerhalb eines Profilblockelements genau und gezielt erzeugt werden. So kann beispielswiese an Bereichen des Profilblockelements die näher an einer Oberfläche angeordnet sind eine andere Steifigkeit erzeugt werden als in anderen Bereichen. Die Bereiche, die näher an einer Oberfläche des Profilblockelements liegen, können als Randbereiche bezeichnet werden. Die Bereiche des Profilblockelements, die keine Randbereiche sind, können als Innenbereiche bezeichnet werden. Die Innenbereiche werden von den Randbereichen umgeben; die Randbereiche liegen räumlich zwischen den Oberflächen des Profilblockelements und den Innenbereichen.

Gemäß einer nächsten vorzugsweisen Ausgestaltungsform der Erfindung ist mindestens eine erste Aussparung über einen Kanal mit mindestens einer anderen Aussparung innerhalb des Profilblockelementes verbunden.

Durch den erfindungsgemäßen Umstand, wonach mindestens eine erste Aussparung über einen Kanal mit mindestens einer anderen Aussparung innerhalb des Profilblockelementes verbunden ist, kann weiter Einfluss auf die Eigenschaften eines Profilblockelementes genommen werden. Beispielsweise kann die mindestens eine erste Aussparung, die über einen Kanal mit mindestens einer anderen Aussparung innerhalb des Profilblockelementes verbunden ist, an einem oberen zur Fahrbahn hin orientierten Bereich des Profilblockelementes angeordnet sein. Dadurch wird ein Profilblockelement bereitgestellt, das insbesondere bei einer nassen Fahrbahn oder bei einer vereisten Fahrbahn ein verbessertes Fahrverhalten aufweist. Hintergrund des günstigen Fahrverhaltens ist, dass bei einem gegebenenfalls erfolgten Abrieb oberer, zu einer Fahrbahn hinweisender Schichten des Profilblockelementes durch die beiden Aussparungen, die über einen Kanal verbunden sind, ein Abflusssystem für eventuell auftretendes Eiswasser erzeugt werden kann. Die Ableitung eventuell auftretenden Eiswassers führt unter anderem zu einer Verbesserung der Bremseigenschaften eines Profilblockelements. Dies führt zu einer Verbesserung des Bremsverhaltens des Luftreifens.

**Gemäß einer aus dem Stand der Technik bekannten Ausgestaltungsform weist die mindestens eine Aussparung eine Tiefe im Profilblockelement auf, die 30% bis 100% und insbesondere 50% bis 100% der Länge einer Ausdehnung des mindestens einen Profilblockelementes entspricht.**
**Durch den Umstand, wonach die mindestens eine Aussparung eine Tiefe im Profilblockelement aufweist, die 30% bis 100% und insbesondere 50% bis 100% der Länge einer Ausdehnung des mindestens einen Profilblockelementes entspricht, eine Druckverteilung in dem Profilblockelement optimiert.** Darüber hinaus wird ein gleichmäßiger Abrieb des Profilblockelements auf dieses Weise sichergestellt.
Für den Fall, dass die Aussparungen in das Profilblockelement hineinragen, aber nur an einer Seitenfläche eine Öffnung des Profilblockelements ausbilden, kann gezielt Einfluss auf die Druckverteilung auf dem Profilblockelement genommen werden.

Gemäß einer nächsten vorzugsweisen Ausgestaltungsform der Erfindung beträgt die Anzahl der Aussparungen in mindestens einem Profilblockelement mindestens 1, 2, 3, 4, 5, 6, 7, 8, 9, 10 oder bis 200.

Gemäß einer nächsten vorzugsweisen Ausgestaltungsform der Erfindung erstreckt sich eine erste Aussparung entlang einer ersten Richtung innerhalb des mindestens einen Profilblockelementes. Ferner erstreckt sich eine zweite Aussparung entlang einer zweiten Richtung des mindestens einen Profilblockelementes. Dabei bildet die mindestens eine erste Aussparung mit der mindestens einen zweiten Aussparung einen Winkel von 0° bis 90° und vorzugsweise von 0° bis 45°. Durch den erfindungsgemäßen Umstand, wonach die mindestens eine erste Aussparung mit der mindestens einen zweiten Aussparung einen Winkel von 0° bis 90° und vorzugsweise von 0° bis 45° bildet, werden eine optimale Blocksteifigkeit und eine optimale Kompressibilität des mindestens einen Profilblockelementes bewirkt.

Gemäß einer nächsten vorzugsweisen Ausgestaltungsform der Erfindung weist die mindestens eine Aussparung allgemein konkav-polygonale Form des Querschnitts, eine allgemein überschlagen-polygonale Form des Querschnitts, eine gleichseitig konkav-polygonale Form des Querschnitts, eine gleichseitig Überschlagen-polygonale Form des Querschnitts, eine gleichwinklig überschlagen-polygonale Form des Querschnitts oder eine regelmäßig überschlagen-polygonale Form des Querschnitts oder eine regelmäßig konvex-polygonale Form des Querschnitts auf.

Gemäß einer nächsten vorzugsweisen Ausgestaltungsform der Erfindung weist mindestens ein Profilblockelement mindestens eine erste Aussparung mit einer Form des Querschnitts gemäß der zuvor beschriebenen Ausführungsform auf und mindestens weist dasselbe Profilblockelement eine andere Aussparung mit derselben oder mit einer anderen Form des Querschnitts gemäß der zuvor beschriebenen Ausführungsform auf.

Gemäß einer nächsten vorzugsweisen Ausgestaltungsform der Erfindung beträgt eine Anzahl der Ecken der polygonalen Form des Querschnittes 3, 4, 5, 6, 7, 8 oder 9. Insbesondere ist eine hexagonale Form des Querschnitts bevorzugt.

Gemäß einer weiteren vorteilhaften Ausführungsform der Erfindung bildet eine Richtung, in die sich eine Aussparung innerhalb eines Profilblockelementes erstreckt, mit einer Fahrbahnkontaktfläche des Profilblockelements einen Winkel von 0° bis 10°.

Gemäß einer nächsten vorzugsweisen Ausgestaltungsform der Erfindung ist ausschließlich in einem Basisbereich des mindestens einen Profilblockelementes mindestens eine Aussparung ausgebildet.

**Gemäß einer aus dem Stand der Technik bekannten Ausführungsform ist ausschließlich in einem Kopfbereich des mindestens einen Profilblockelementes mindestens eine Aussparung ausgebildet.**
Bei einem Basisbereich des mindestens einen Profilblockelementes handelt es sich um einen solchen Bereich des Profilblockelementes, der zu der Lauffläche des Luftreifens hin orientiert ist. Bei dem Kopfbereich des mindestens einen Profilblockelementes handelt es sich hingegen um einen solchen Bereich des mindestens einen Profilblockelements, der zu einer möglichen Fahrbahn hin orientiert ist. Der Kopfbereich weist in radialer Richtung von dem Laufstreifen weg. Der Basisbereich ist räumlich zwischen dem Kopfbereich und dem Laufstreifen des Luftreifens angeordnet. Durch den Umstand, dass die Aussparungen lediglich in einem Basisbereich oder in einem Kopfbereich ausgebildet sind, kann Einfluss auf die Kompressibilität des Profilblockelements genommen werden.
Je weiter die Aussparungen lediglich im Bereich des Kopfbereichs angeordnet sind, desto höher ist die Kompressibilität. Darüber hinaus kann es bei Abriebeffekten an dem Profilblockelement dazu kommen, dass die Aussparungen frei gelegt werden, in diesem Fall würde eine vergrößerte Außenfläche des Profilblockelements entstehen die zu veränderten Fahreigenschaften des Profilblockelementes führt. Dies kann bei bestimmten Fahrbahnbedingungen, beispielsweise bei einer nassen oder mit Eis bedeckten Fahrbahn, sinnvoll sein.
Eine Anordnung der Aussparungen der Aussparungen lediglich in einem Basisbereich führt zu einem verbesserten Bremsverhalten des Profilblockelementes. Darüber hinaus sind in diesem Fall der ausschließlichen Anordnung im Basisbereich die Aussparungen von Abriebeffekten an dem Profilblockelement nicht selbst betroffen.

Gemäß einer nächsten vorzugsweisen Ausgestaltungsform der Erfindung erstreckt sich die Ausdehnung der mindestens einen Aussparung in dem mindestens einen Profilblockelement parallel oder orthogonal zu einer Umlaufrichtung des Luftreifens.

Gemäß einer nächsten vorzugsweisen Ausgestaltungsform der Erfindung steht eine erste Ausdehnung eines Querschnitts mindestens einer Aussparung zu einer zweiten Ausdehnung des Querschnitts der mindestens einen Aussparung in einem Längenverhältnis von mindestens 1:2. Dabei erstreckt sich die erste Ausdehnung radial von dem Laufstreifen weg und senkrecht zu einer Rotationsachse des Luftreifens. Die zweite Ausdehnung erstreckt sich parallel zu einer Umlaufrichtung des Luftreifens oder parallel zu einer Rotationsachse des Luftreifens. Die zweite Ausdehnung erstreckt sich insbesondere orthogonal zu der ersten Ausdehnung. Durch den Umstand, wonach sich die erste Ausdehnung des Querschnitt der mindestens einen Aussparung zu der zweiten Ausdehnung des Querschnitts der mindestens einen Aussparung in einem Längenverhältnis von mindestens 1:2 steht, wird eine besonders hohe Kompressibilität bereitgestellt. Ferner wird ein besonderes gutes Bremsverhalten des Profilblockelementes sichergestellt.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1: eine schematische Darstellung eines Bereichs eines erfindungsgemäßen Luftreifens gemäß einer ersten Ausführungsform in Radialschnittansicht;
- Fig. 2: eine schematische Darstellung eines Bereichs eines erfindungsgemäßen Luftreifens gemäß einer zweiten Ausführungsform in Radialschnittansicht;
- **Fig. 3**: **eine schematische Darstellung eines Bereichs eines Luftreifens aus dem Stand der Technik in Radialschnittansicht;**
- **Fig. 4**: **eine schematische Darstellung eines Bereichs eines Luftreifens aus dem Stand der Technik in Radialschnittansicht;**
- **Fig. 5**: **eine schematische Darstellung eines Bereichs eines Luftreifens aus dem Stand der Technik in Radialschnittansicht;**
- **Fig. 6**: **eine schematische Darstellung eines Bereichs eines Luftreifens aus dem Stand der Technik in Radialschnittansicht;**
- Fig. 7: eine schematische Darstellung eines Bereichs eines erfindungsgemäßen Luftreifens gemäß einer siebenten Ausführungsform in Radialschnittansicht;
- Fig. 8: eine schematische Darstellung eines Bereichs eines erfindungsgemäßen Luftreifens gemäß einer achten Ausführungsform in einer Schnittperspektive;
- Fig. 9: eine schematische Darstellung eines Bereichs eines erfindungsgemäßen Luftreifens gemäß einer neunten Ausführungsform in einer Schnittperspektive;
- **Fig. 10**: **eine schematische Darstellung eines Bereichs eines Luftreifens aus dem Stand der Technik in einer Schnittperspektive;**
- Fig. 11: eine schematische Darstellung möglicher Formen eines Querschnitts der Aussparung in der Seitenfläche eines Profilblockelements auf einem erfindungsgemäßen Luftreifen;
- **Fig. 12.**: **eine schematische Darstellung eines Luftreifens aus dem Stand der Technik in Radialschnittansicht;**
- Fig. 13: eine schamtische Darstellung einer beispielhaften Oberfläche einer Aussparung in einem Profilblockelement.

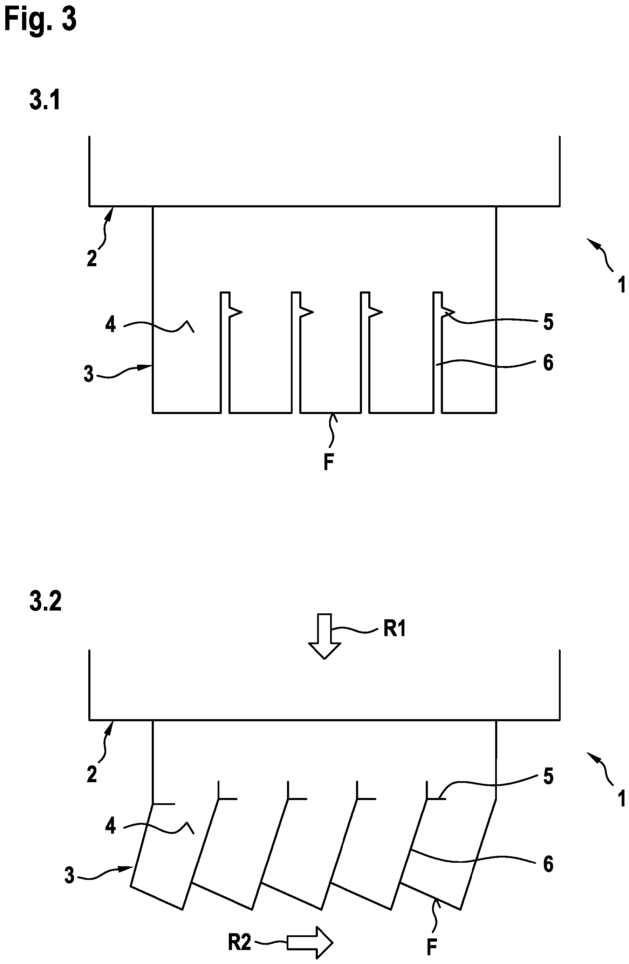

**Die in den** **Figuren 3 bis 6****, sowie 10 und 12 dargestellten Ausführungsformen fallen nicht unter den Schutzbereich des Anspruchs 1.**

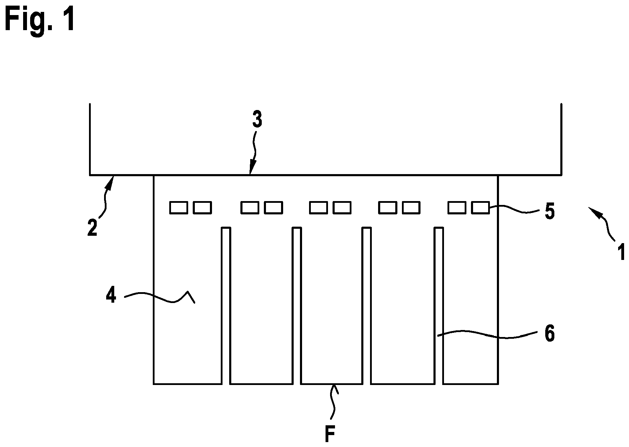

In der Figur 1 ist ein Bereich eines erfindungsgemäßen Luftreifens gemäß einer ersten Ausführungsform schematisch in Radialschnittansicht dargestellt. Der Luftreifen 1 weist einen Laufstreifen 2 auf. Dabei weist der profilierte Laufstreifen 2 radial erhabene, voneinander getrennte Profilblockelemente 3 auf. Dabei weist mindestens ein Profilblockelement 3 an einer Seitenfläche 4 des Profilblockelementes 3 mindestens eine Aussparung 5 auf. Dabei ist die Aussparung 5 zur Beeinflussung der mechanischen Eigenschaften, insbesondere eines Kompressionsmoduls, des mindestens einen Profilblockelementes 3 vorgesehen. Die mindestens eine Aussparung 5 ist mittels eines Lasers hergestellt worden. Das Profilblockelement 3 weist insbesondere Einschnitte 6 im Profilblockelement 3 auf. Die Einschnitte 6 führen zu Herausbildung einer lammellenartigen Struktur des Profilblockelements 3.
Mit F wird eine Fahrbahnkontaktfläche des Profilblockelementes 3 bezeichnet.

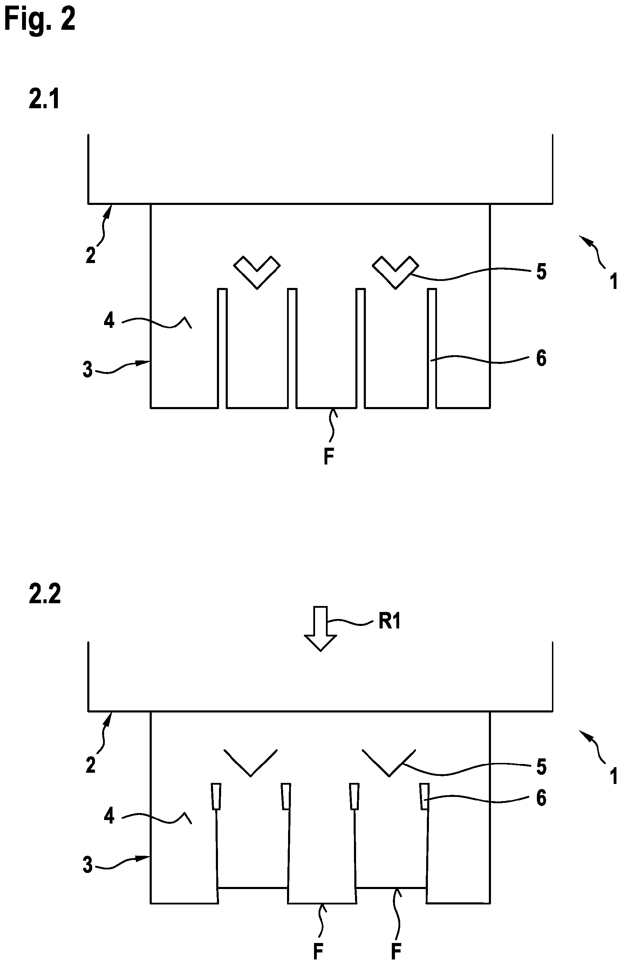

In der Figur 2 ist ein Bereich eines erfindungsgemäßen Luftreifens 1 gemäß einer zweiten Ausführungsform schematisch in Radialschnittansicht dargestellt. Gemäß der in der Figur 2 dargestellten Ausführungsform ist die Aussparung 5 V-förmig ausgestaltet. Teilfigur 2.1 zeigt das Profilblockelement 3 in einem Zustand, ohne dass ein solcher Druck auf das Profilblockelement 3 wirkt, der zu einer Verformung des Profilblockelements 3 führt. In Teilfigur 2.2 wirkt ein Druck auf das Profilblockelement 3 der zu einer Verformung des Profilblockelementes 3 führt. Der Druck wirkt in Richtung R1 auf das Profilblockelement 3. Durch die Wirkung des Druckes werden die Aussparungen 5 zusammengepresst. Darüber hinaus kommt es zu einer Verschiebung bestimmter Bereiche des Profilblockelementes 3 gegeneinander. Diese Verschiebung wird durch die Einschnitte 6 unter der Druckeinwirkung hervorgerufen. Die in der Figur 2 dargestellte Ausführungsform des Profilblockelements 3 stellt besonders gute Bremseigenschaften des Profilblockelementes 3 sicher.

**In der** **Figur 3** **ist ein Bereich eines aus dem Stand der Technik bekannten Luftreifens 1 schematisch in Radialschnittansicht dargestellt.** Entsprechend der Figur 3 ist die Aussparung 5 keilförmig ausgestaltet. Teilfigur 3.1 zeigt das Profilblockelement 3 in einem Zustand, ohne dass ein solcher Druck auf das Profilblockelement 3 wirkt, der zu einer Verformung des Profilblockelements 3 führt. In Teilfigur 3.2 wirkt ein Druck auf das Profilblockelement 3 der zu einer Verformung des Profilblockelementes 3 führt. Der Druck wirkt in Richtung R1 auf das Profilblockelement 3. Durch die Wirkung des Druckes werden die Aussparungen 5 zusammengepresst. Darüber hinaus kommt es zu einer Verschiebung bestimmter Bereiche des Profilblockelementes 3 gegeneinander. Diese Verschiebung wird durch die Einschnitte 6 unter der Druckeinwirkung hervorgerufen. Darüber hinaus drehen sich die durch die Einschnitte 6 erzeugten lammellenartigen Bereiche des Profilblockelementes 3 in Richtung R2. Die in der Figur 3 dargestellte Ausführungsform des Profilblockelements 3 stellt besonders im Fall einer schneebedeckten oder eisbedeckten Fahrbahn gute Fahreigenschaften des Profilblockelementes 3 sicher.

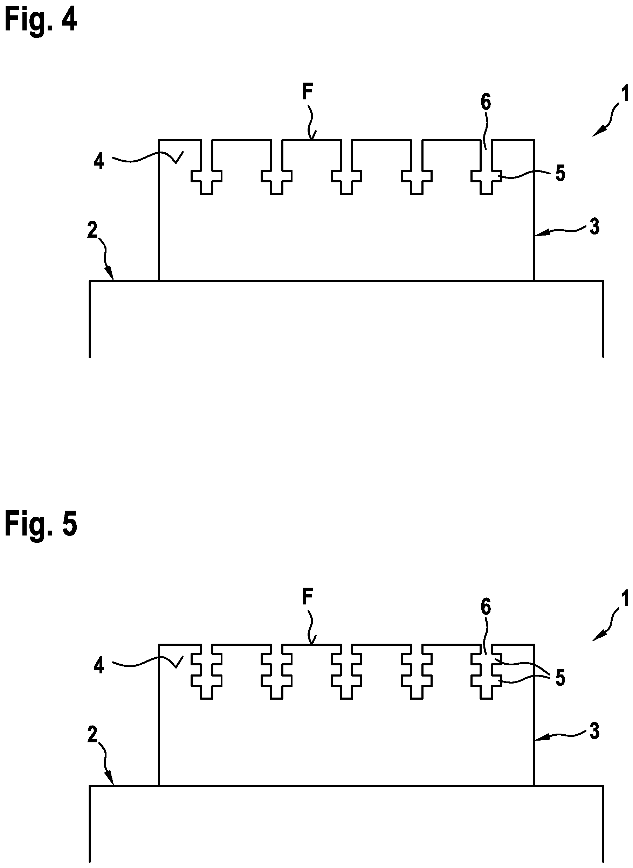

**In der** **Figur 4** **ist ein Bereich eines aus dem Stand der Technik bekannten Luftreifens 1 schematisch in Radialschnittansicht dargestellt.** Entsprechend der Figur 4 ist die jeweilige Aussparung 5 derart ausgestaltet, dass sie mit dem jeweiligen Einschnitt 6 verbunden ist.

**In der** **Figur 5** **ist ein Bereich eines aus dem Stand der Technik bekannten Luftreifens 1 schematisch in Radialschnittansicht dargestellt.** Im Unterschied zu der in der Figur 4 schematisch dargestellten Ausführungsform sind jeweils mindestens 2 Aussparungen 5 derart ausgestaltet, dass sie mit dem jeweiligen Einschnitt 6 verbunden sind.

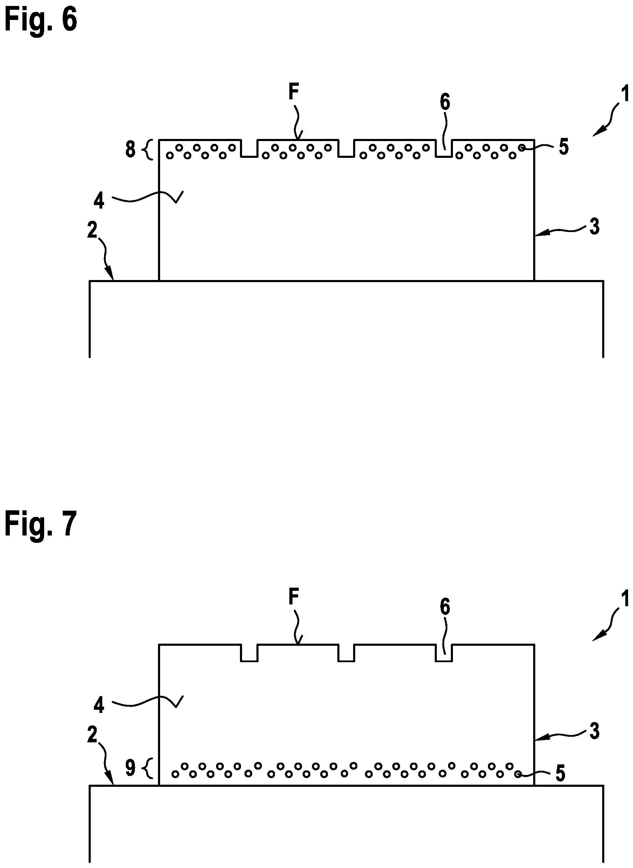

**In der** **Figur 6** **ist ein Bereich eines aus dem Stand der Technik bekannten Luftreifens 1 schematisch in Radialschnittansicht dargestellt.** Gemäß der in der Figur 6 schematisch dargestellten Ausführungsform weisen die Aussparungen 5 beispielsweise einen kreisförmigen Querschnitt auf. Die in dieser Figur dargestellte Ausführungsform ist allerdings nicht auf diesen Querschnitt beschränkt. Entsprechend der sechsten Ausführungsform sind die Aussparungen 5 derart ausgebildet, dass sie ausschließlich in einem Kopfbereich 8 des Profilblockelementes 3 angeordnet sind. Diese Ausgestaltungsform stellt eine hohe Kompressibilität des Profilblockelements 3 sicher.

In der Figur 7 ist ein Bereich eines erfindungsgemäßen Luftreifens 1 gemäß einer siebenten Ausführungsform schematisch in Radialschnittansicht dargestellt. Gemäß der in der Figur 7 schematisch dargestellten Ausführungsform weisen die Aussparungen 5 beispielsweise einen kreisförmigen Querschnitt auf. Die in dieser Figur dargestellte Ausführungsform ist allerdings nicht auf diesen Querschnitt beschränkt. Entsprechend der siebenten Ausführungsform sind die Aussparungen 5 derart ausgebildet, dass sie ausschließlich in einem Basisbereich 9 des Profilblockelementes 3 angeordnet sind. Diese Ausgestaltungsform stellt eine gute Bremseigenschaft des Profilblockelements 3 sicher.

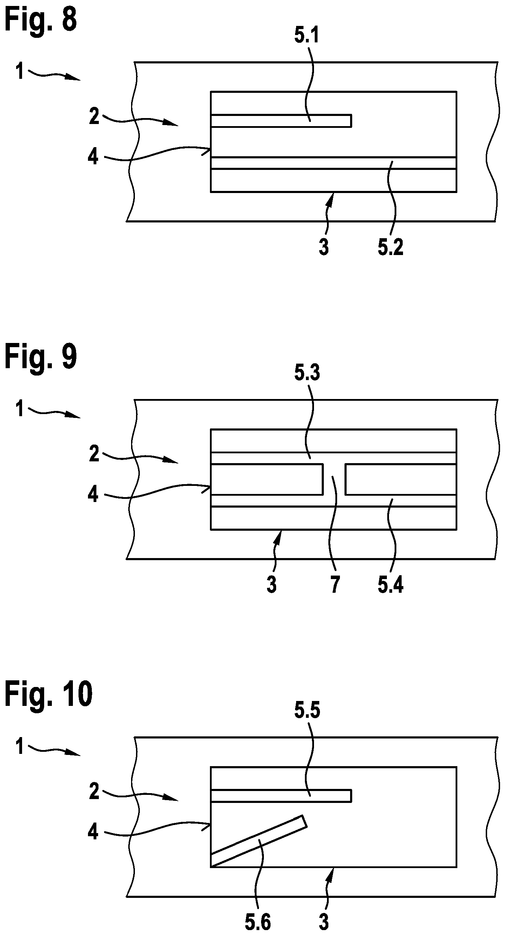

In der Figur 8 ist ein Bereich eines erfindungsgemäßen Luftreifens 1 gemäß einer achten Ausführungsform schematisch in einer Schnittperspektive dargestellt. Gemäß der in der Figur 8 schematisch dargestellten Ausführungsform weisen die Aussparungen 5.1 und 5.2 unterschiedliche Längen auf. Die in der Figur 8 schematisch dargestellte Ausführungsform führt im Vergleich zu den Profilblockelementen, die aus dem Stand der Technik bekannt sind, insbesondere zu einer optimierten Druckverteilung im Profilblockelement 3 sowie zu einem optimierten Abrieb des Profilblockelements 3.

In der Figur 9 ist ein Bereich eines erfindungsgemäßen Luftreifens 1 gemäß einer neunten Ausführungsform schematisch in einer Schnittperspektive dargestellt. Gemäß der in der Figur 9 schematisch dargestellten Ausführungsform sind die Aussparungen 5.3 und 5.4 über einen Kanal 7 miteinander verbunden. Der Kanal 7 ist für Flüssigkeiten und Gase durchlässig. Der Kanal 7 ist vorzugsweise mittels eines Lasers hergestellt worden.

**In der** **Figur 10** **ist ein Bereich eines aus dem Stand der Technik bekannten Luftreifens** 1 **schematisch in einer Schnittperspektive dargestellt.** Gemäß der in der Figur 10 schematisch dargestellten Ausführungsform erstreckt sich mindestens eine erste Aussparung 5.5 entlang einer ersten Richtung innerhalb des mindestens einen Profilblockelementes 3. Die mindestens eine zweite Aussparung 5.6 erstreckt sich entlang einer zweiten Richtung des mindestens einen Profilblockelementes 3. Dabei bildet die mindestens eine erste Aussparung 5.5 mit der mindestens einen zweiten Aussparung 5.6 einen Winkel von 0° bis 45°. Der Umstand, dass die mindestens eine erste Aussparung 5.5 mit der mindestens einen zweiten Aussparung 5.6 einen Winkel von 0° bis 45° bildet, führt insbesondere zu anisotropen Eigenschaften des mindestens einen Profilblockelements 3, beispielsweise hinsichtlich der Kompressibilität oder des Abriebs des mindestens einen Profilblockelements 3.

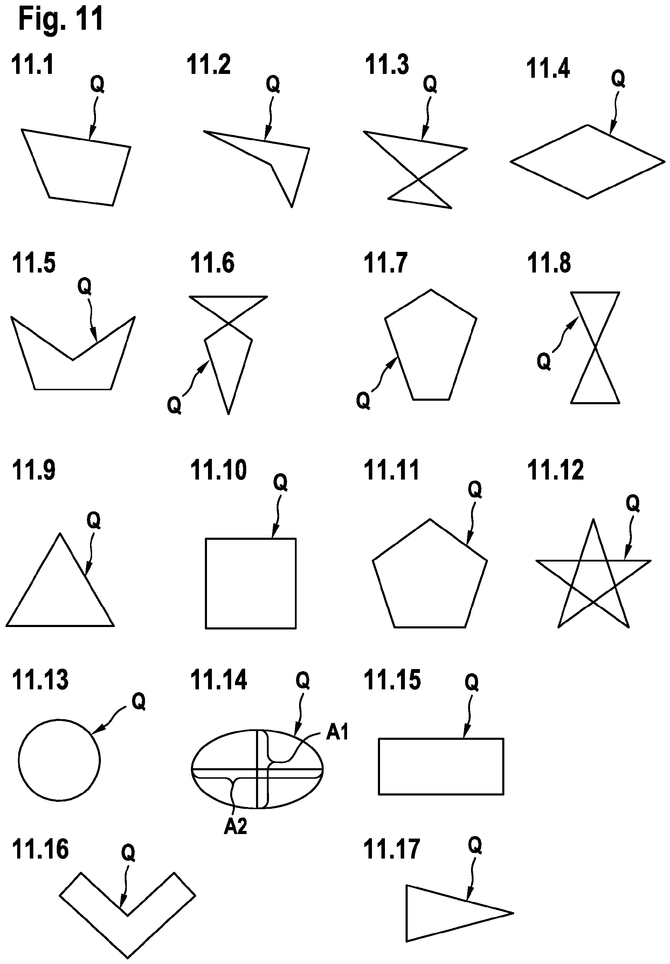

In der Figur 11 sind mögliche Formen eines Querschnitts Q der Aussparung 5 in der Seitenfläche 4 eines Profilblockelements 3 auf einem erfindungsgemäßen Luftreifen 1 schematisch dargestellt.
Teilfigur 11.1 zeigt eine allgemein konvex-polygonale Form des Querschnitts Q.
Teilfigur 11.2 zeigt eine allgemein konkav-polygonale Form des Querschnitts Q.
Teilfigur 11.3 zeigt eine allgemein überschlagen-polygonale Form des Querschnitts Q.
Teilfigur 11.4 zeigt eine gleichseitig konvex-polygonale Form des Querschnitts Q.
Teilfigur 11.5 zeigt eine gleichseitig konkav-polygonale Form des Querschnitts Q.
Teilfigur 11.6 zeigt eine gleichseitig überschlagen-polygonale Form des Querschnitts Q.
Teilfigur 11.7 zeigt eine gleichwinklig konvexe Form des Querschnitts Q.
Teilfigur 11.8 zeigt eine gleichwinklig überschlagene Form des Querschnitts Q.
Teilfigur 11.9 zeigt eine regelmäßig konvex-dreieckige Form des Querschnitts Q.
Teilfigur 11.10 zeigt eine regelmäßig konvex-quadratische Form des Querschnitts Q.
Teilfigur 11.11 zeigt eine regelmäßig konvex-pentagonale Form des Querschnitts Q.
Teilfigur 11.12 zeigt eine regelmäßig überschlagene Form des Querschnitts Q.
Teilfigur 11.13 zeigt eine kreisrunde Form des Querschnitts Q.
Teilfigur 11.14 zeigt eine elliptische Form des Querschnitts. Im Fall dieser Teilfigur ist beispielhaft gezeigt, dass eine erste Ausdehnung A1 des Querschnitt Q mindestens einer Aussparung 5 zu einer zweiten Ausdehnung A2 des Querschnitts Q der mindestens einen Aussparung 5 in einem Längenverhältnis von mindestens 1:2 steht. Dabei erstreckt sich die erste Ausdehnung A1 radial von dem Laufstreifen 2 weg und senkrecht zu einer Rotationsachse des Luftreifens 1. Die zweite Ausdehnung A2 erstreckt sich parallel zu einer Umlaufrichtung des Luftreifens 1 oder parallel zu einer Rotationsachse des Luftreifens 1.
Teilfigur 11.15 zeigt eine rechteckige Form des Querschnitts Q.
Teilfigur 11.16 zeigt eine V-Form des Querschnitts Q.
Teilfigur 11.17 zeigt eine Keil-Form des Querschnitts Q.

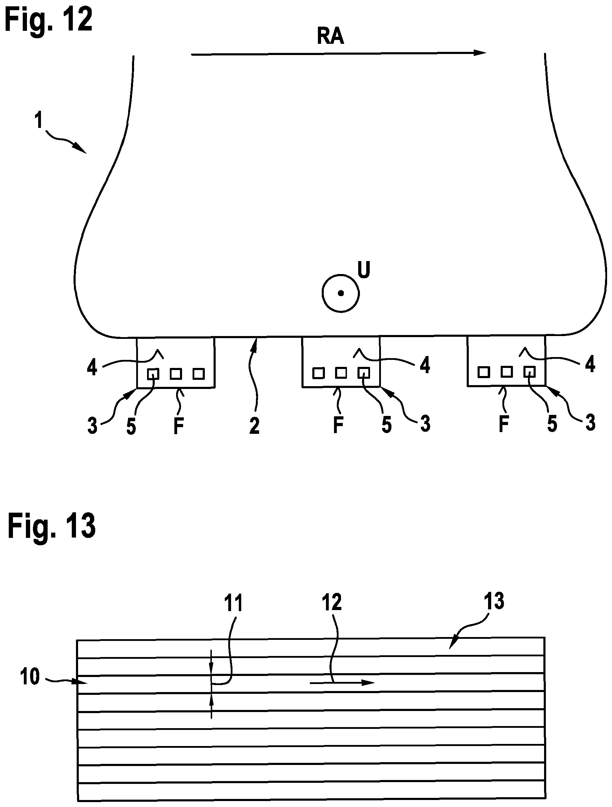

**In der** **Figur 12** **ist ein aus dem Stand der Technik bekannter Luftreifen 1 in Radialschnittansicht schematisch dargestellt.** Der in der Figur 12 schematische dargestellte Luftreifen 1 stellt beispielhaft einen Luftreifen dar, dessen Bereiche in den Figuren 1, 2, 3, 4, 5, 6, 7, 8, 9 oder 10 schematisch dargestellt sind. Ein in diesen Figuren dargestellter Bereich des Luftreifens 1 stellt schematisch beispielsweise ein Profilblockelement 3 des Luftreifens der Figur 12 dar. Die in diesen Figuren dargestellten Profilblockelemente 3 sind daher beispielswiese auf dem Laufstreifen 2 des Luftreifens 1 angeordnet.
Die in der Figur 11 schematisch dargestellten Formen des Querschnitts Q der Aussparung . 5 in der Seitenfläche 4 eines Profilblockelements 3 können ebenfalls auf dem erfindungsgemäßen Luftreifen 1 gemäß der Figur 12 erzeugt worden sein.
Die Radialschnittansicht des Luftreifens 1 der Figur 12 bezieht sich auf eine Rotationsachse RA. Der Luftreifen 1 rotiert in Umlaufrichtung U um die Rotationsachse RA.

In der Figur 13 ist eine beispielhafte Oberfläche 13 einer Aussparung 5 in einem Profilblockelement 3 dargestellt, die mittels eines Lasers hergestellt worden ist. Die Oberfläche 13 weist parallel verlaufende längliche Vertiefungen 10 auf. Die Vertiefungen 10 weisen je eine Breite 11 zwischen 0,1 mm bis 1 mm auf. Die Breite 11 erstreckt sich rechtwinklig zu der Ausdehnungsrichtung 12 der Vertiefungen 10. Eine solche Oberfläche 13 einer Aussparung 5 wird insbesondere mittels eines gepulsten Lasers erzeugt.

### Bezugszeichenliste

- 1: Luftreifen
- 2: Laufstreifen
- 3: Profilblockelement
- 4: Seitenfläche
- 5: Aussparung
- 5.1: Aussparung
- 5.2: Aussparung
- 5.3: Aussparung
- 5.4: Aussparung
- 5.5: Aussparung
- 5.6: Aussparung
- 7: Kanal
- 8: Kopfbereich
- 9: Basisbereich
- 10: Vertiefungen
- 11: Breite einer Vertiefung
- 12: Ausdehnungsrichtung
- 13: Oberfläche einer Aussparung
- A1: erste Ausdehnung
- A2: zweite Ausdehnung
- F: Fahrbahnkontaktfläche eines Profilblockelements
- RA: Rotationsachse
- R1: Druckrichtung
- R2: Drehrichtung
- Q: Querschnitt
- U: Umlaufrichtung

## Patentansprüche

1. Luftreifen (1) mit einem profilierten Laufstreifen (2) mit radial erhabenen, voneinander getrennten Profilblockelementen (3), wobei mindestens ein Profilblockelement (3) an einer Seitenfläche (4) des Profilblockelements (3) mindestens eine Aussparung (5) aufweist, wobei die Aussparung (5) zur Beeinflussung der mechanischen Eigenschaften des mindestens einen Profilblockelements (3) vorgesehen ist, und
die mindestens eine Aussparung (5) mittels eines Lasers erzeugt worden ist, wobei die mindestens eine Aussparung (5) eine Tiefe im Profilblockelement (3) aufweist, die 100% der Länge einer Ausdehnung des mindestens einen Profilblockelementes (3) entspricht, **dadurch gekennzeichnet, dass** die mindestens eine Aussparung (5) ausschließlich in einem Basisbereich (9) des mindestens einen Profilblockelements (3) ausgebildet ist, wobei es sich bei einem Basisbereich (9) des mindestens einen Profilblockelements (3) um einen solchen Bereich des Profilblockelementes (3) handelt, der zu einer Lauffläche des Luftreifens (1) hin orientiert ist, und wobei das mindestens eine Profilblockelement (3) einen Kopfbereich (8) aufweist, wobei es sich bei dem Kopfbereich (8) des mindestens einem Profilblockelements (3) um einen solchen Bereich des mindestens einen Profilblockelements (3) handelt, der zu einer möglichen Fahrbahn hin orientiert ist, wobei der Kopfbereich (3) in radialer Richtung von dem Laufstreifen (2) weg weist, wobei der Basisbereich (9) räumlich zwischen dem Kopfbereich (8) und dem Laufstreifen (2) des Luftreifens (1) angeordnet ist, wobei sich eine Seitenfläche des Profilblockelementes (3) schräg oder senkrecht zu einer Fahrbahnkontaktfläche (F) des Profilblockelementes (3) erstreckt, wobei die Fahrbahnkontaktfläche (F) die Oberfläche des Profilblockelements (3) ist, die bei einem regulären Abrollen des Luftreifens (1) in unmittelbarem Kontakt mit der Fahrbahn steht, auf der der Luftreifen (1) abrollt, wobei die Seitenfläche des Profilblockelements (3) sich radial von dem Laufstreifen (2) wegweisend und rechtwinklig zu einer Rotationsachse (RA) des Luftreifens (1) erstreckt, wobei eine minimale Ausdehnung einer Fläche eines Querschnittes (Q) der mindestens einen Aussparung (5) 0,05mm bis 0,1mm beträgt, wobei es sich bei dem Querschnitt (Q) um den Querschnitt (Q) einer Aussparung (5) handelt, der orthogonal zu einer Längsausrichtung der Aussparung (5) durch das Profilblockelement (3) ausgerichtet ist, wobei die Längsausrichtung der Ausrichtung der Aussparung (5) in dem Profilblockelement (3) entspricht, die parallel oder orthogonal zu einer Umlaufrichtung des Luftreifens (1) und jeweils rechtwinklig zu seiner Rotationsachse (RA) liegt.

2. Luftreifen (1) nach dem vorhergehenden Anspruch, **dadurch gekennzeichnet, dass** die mindestens eine Aussparung (5) mittels eines gepulsten Lasers erzeugt worden ist.

3. Luftreifen (1) nach einem der vorhergehenden Ansprüche, **dadurch gekennzeichnet, dass** der Querschnitt (Q) der mindestens einen Aussparung (5) im Profilblockelement (3) variiert.

4. Luftreifen (1) nach einem der vorhergehenden Ansprüche, **dadurch gekennzeichnet, dass** mindestens eine erste Aussparung (5.3) über einen Kanal (7) mit mindestens einer anderen Aussparung (5.4) innerhalb der Profilblockelements (3) verbunden ist.

5. Luftreifen (1) nach einem der vorhergehenden Ansprüche, **dadurch gekennzeichnet, dass** die Anzahl der Aussparungen (5) in mindestens einem Profilblockelement (3) mindestens 1, 2, 3, 4, 5, 6, 7, 8, 9, 10 oder bis 200 beträgt.

6. Luftreifen (1) nach einem der vorhergehenden Ansprüche, **dadurch gekennzeichnet, dass** mindestens eine erste Aussparung (5.5) sich entlang einer ersten Richtung innerhalb des mindestens einen Profilblockelementes (3) erstreckt und mindestens eine zweite Aussparung (5.6) sich entlang einer zweiten Richtung des mindestens einen Profilblockelementes (3) erstreckt, wobei die mindestens eine erste Aussparung (5.5) mit der mindestens einen zweiten Aussparung (5.6) einen Winkel von 0° bis 90°, vorzugsweise 0° bis 45°, bildet.

7. Luftreifen (1) nach einem der vorhergehenden Ansprüche, **dadurch gekennzeichnet, dass** die mindestens eine Aussparung (5) eine allgemein konkav-polygonale Form des Querschnitts (Q), eine allgemein überschlagen-polygonale Form des Querschnitts (Q), eine gleichseitig konkav-polygonale Form des Querschnitts (Q), eine gleichseitig überschlagen-polygonale Form des Querschnitts (Q), eine gleichwinklig überschlagen-polygonale Form des Querschnitts (Q) oder eine regelmäßig überschlagen-polygonale Form des Querschnitts (Q) oder eine regelmäßig konvex-polygonale Form des Querschnitts (Q) aufweist.

8. Luftreifen (1) nach dem vorhergehenden Anspruch, **dadurch gekennzeichnet, dass** mindestens ein Profilblockelement (3) mindestens eine erste Aussparung (5) mit einer Form des Querschnitts (Q) nach dem vorhergehenden Anspruch aufweist und mindestens eine andere Aussparung (5) mit derselben oder einer anderen Form des Querschnitts (Q) nach dem vorhergehenden Anspruch aufweist.

9. Luftreifen (1) nach einem der vorhergehenden Ansprüche, **dadurch gekennzeichnet, dass** eine Richtung, in die sich eine Aussparung (5) innerhalb eines Profilblockelementes (3) erstreckt, mit einer Fahrbahnkontaktfläche (F) des Profilblockelements (3) einen Winkel von 0° bis 10° bildet.

10. Luftreifen (1) nach einem der vorhergehenden Ansprüche, **dadurch gekennzeichnet**, das die Ausdehnung der mindestens einen Aussparung (5) sich parallel oder orthogonal zu einer Umlaufrichtung des Luftreifens (1) in dem mindestens einen Profilblockelement (3) erstreckt.

11. Luftreifen (1) nach einem der vorhergehenden Ansprüche, **dadurch gekennzeichnet, dass** eine erste Ausdehnung (A1) eines Querschnitt (Q) mindestens einer Aussparung (5) zu einer zweiten Ausdehnung (A2) des Querschnitts (Q) der mindestens einen Aussparung (5) in einem Längenverhältnis von mindestens 1:2 steht, wobei sich die erste Ausdehnung (A1) radial von dem Laufstreifen (2) weg und senkrecht zu einer Rotationsachse des Luftreifens (1) erstreckt und die zweite Ausdehnung (A2) sich parallel zu einer Umlaufrichtung des Luftreifens (1) oder parallel zu einer Rotationsachse des Luftreifens (1) erstreckt.

## Claims

1. Pneumatic tyre (1) with a profiled tread (2) comprising radially raised tread bar elements (3) that are separated from one another, wherein at least one tread bar element (3) has at least one recess (5) on a side face (4) of the tread bar element (3), wherein the recess (5) is intended for influencing the mechanical properties of the at least one tread bar element (3), and the at least one recess (3) has been created by means of a laser, wherein the at least one recess (5) has a depth in the tread bar element (3) that corresponds to 100% of the length of an extent of the at least one tread bar element (3), **characterized in that** the at least one recess (5) is formed exclusively in a base region (9) of the at least one tread bar element (3), wherein a base region (9) of the at least one tread bar element (3) is such a region of the tread bar element (3) that is oriented towards a running surface of the pneumatic tyre (1), and wherein the at least one tread bar element (3) has a head region (8), wherein the head region (8) of the at least one tread bar element (3) is such a region of the at least one tread bar element (3) that is oriented towards a possible roadway, wherein the head region (3) faces away from the tread (2) in the radial direction, wherein the base region (9) is arranged spatially between the head region (8) and the tread (2) of the pneumatic tyre (1), wherein a side face of the tread bar element (3) extends obliquely or perpendicularly to a roadway contact area (F) of the tread bar element (3), wherein the roadway contact area (F) is the surface of the tread bar element (3) that is in direct contact with the roadway on which the pneumatic tyre (1) rolls during regular rolling of the pneumatic tyre (1), wherein the side face of the tread bar element (3) extends radially away from the tread (2) and at right angles to an axis of rotation (RA) of the pneumatic tyre (1), wherein a minimum extent of a surface area of a cross section (Q) of the at least one recess (5) is 0.05 mm to 0.1 mm, wherein the cross section (Q) is the cross section (Q) of a recess (5) that is aligned orthogonal to a longitudinal alignment of the recess (5) through the tread bar element (3), wherein the longitudinal alignment corresponds to the alignment of the recess (5) in the tread bar element (3) that lies parallel or orthogonal to a circumferential direction of the pneumatic tyre (1) and in each case at right angles to its axis of rotation (RA).

2. Pneumatic tyre (1) according to the preceding claim, **characterized in that** the at least one recess (5) has been created by means of a pulsed laser.

3. Pneumatic tyre (1) according to one of the preceding claims, **characterized in that** the cross section (Q) of the at least one recess (5) in the tread bar element (3) varies.

4. Pneumatic tyre (1) according to one of the preceding claims, **characterized in that** at least one first recess (5.3) is connected to at least one other recess (5.4) within the tread bar element (3) by way of a channel (7).

5. Pneumatic tyre (1) according to one of the preceding claims, **characterized in that** the number of recesses (5) in at least one tread bar element (3) is at least 1, 2, 3, 4, 5, 6, 7, 8, 9, 10 or up to 200.

6. Pneumatic tyre (1) according to one of the preceding claims, **characterized in that** at least one first recess (5.5) extends along a first direction within the at least one tread bar element (3) and at least one second recess (5.6) extends along a second direction of the at least one tread bar element (3), wherein the at least one first recess (5.5) forms an angle of 0° to 90°, preferably 0° to 45°, with the at least one second recess (5.6).

7. Pneumatic tyre (1) according to one of the preceding claims, **characterized in that** the at least one recess (5) has a generally concave-polygonal form of the cross section (Q), a generally crossed-polygonal form of the cross section (Q), an equilaterally concave-polygonal form of the cross section (Q), an equilaterally crossed-polygonal form of the cross section (Q), an equiangularly crossed-polygonal form of the cross section (Q) or a regularly crossed-polygonal form of the cross section (Q) or a regularly convex-polygonal form of the cross section (Q).

8. Pneumatic tyre (1) according to the preceding claim, **characterized in that** at least one tread bar element (3) has at least one first recess (5) with a form of the cross section (Q) according to the preceding claim and at least one other recess (5) with the same or another form of the cross section (Q) according to the preceding claims.

9. Pneumatic tyre (1) according to one of the preceding claims, **characterized in that** a direction in which a recess (5) extends within a tread bar element (3) forms an angle of 0° to 10° with a roadway contact area (F) of the tread bar element (3).

10. Pneumatic tyre (1) according to one of the preceding claims, **characterized in that** the extent of the at least one recess (5) extends in the at least one tread bar element (3) parallel or orthogonally to a circumferential direction of the pneumatic tyre (1).

11. Pneumatic tyre (1) according to one of the preceding claims, **characterized in that** a first extent (A1) of a cross section (Q) of at least one recess (5) is in a length ratio of at least 1:2 with a second extent (A2) of the cross section (Q) of the at least one recess (5), wherein the first extent (A1) extends radially away from the tread (2) and perpendicularly to an axis of rotation of the pneumatic tyre (1) and the second extent (A2) extends parallel to a circumferential direction of the pneumatic tyre (1) or parallel to an axis of rotation of the pneumatic tyre (1).

## Revendications

1. Pneumatique (1) comprenant une bande de roulement profilée (2) avec des éléments de blocs profilés (3) rehaussés radialement, séparés les uns des autres, au moins un élément de bloc profilé (3) présentant au moins un évidement (5) au niveau d'une surface latérale (4) de l'élément de bloc profilé (3), l'évidement (5) étant prévu pour influencer les propriétés mécaniques de l'au moins un élément de bloc profilé (3), et
l'au moins un évidement (5) ayant été produit au moyen d'un laser, l'au moins un évidement (5) présentant une profondeur dans l'élément de bloc profilé (3) qui correspond à 100 % de la longueur d'une étendue de l'au moins un élément de bloc profilé (3), **caractérisé en ce que** l'au moins un évidement (5) est réalisé exclusivement dans une région de base (9) de l'au moins un élément de bloc profilé (3), une région de base (9) de l'au moins un élément de bloc profilé (3) étant une région de l'élément de bloc profilé (3) qui est orientée vers une surface de roulement du pneumatique (1), et l'au moins un élément de bloc profilé (3) présentant une région de tête (8), et la région de tête (8) de l'au moins un élément de bloc profilé (3) étant une région de l'au moins un élément de bloc profilé (3) qui est orientée vers une chaussée possible, la région de tête (3) étant orientée dans la direction radiale à l'écart de la bande de roulement (2), la région de base (9) étant disposée spatialement entre la région de tête (8) et la bande de roulement (2) du pneumatique (1), une face latérale de l'élément de bloc profilé (3) s'étendant obliquement ou perpendiculairement à une surface de contact avec la chaussée (F) de l'élément de bloc profilé (3), la surface de contact avec la chaussée (F) étant la surface de l'élément de bloc profilé (3) qui, dans le cas d'un roulement régulier du pneumatique (1), est en contact direct avec la chaussée sur laquelle roule le pneumatique (1), la surface latérale de l'élément de bloc profilé (3) s'étendant radialement à l'écart de la bande de roulement (2) et à angle droit par rapport à un axe de rotation (RA) du pneumatique (1), une étendue minimale d'une surface d'une section transversale (Q) de l'au moins un évidement (5) étant de 0,05 mm à 0,1 mm, la section transversale (Q) étant la section transversale (Q) d'un évidement (5) qui est orientée perpendiculairement à une orientation longitudinale de l'évidement (5) à travers l'élément de bloc profilé (3), l'orientation longitudinale correspondant à l'orientation de l'évidement (5) dans l'élément de bloc profilé (3), qui est situé parallèlement ou perpendiculairement à une direction périphérique du pneumatique (1) et à chaque fois à angle droit par rapport à son axe de rotation (RA).

2. Pneumatique (1) selon la revendication précédente, **caractérisé en ce que** l'au moins un évidement (5) a été produit au moyen d'un laser pulsé.

3. Pneumatique (1) selon l'une quelconque des revendications précédentes, **caractérisé en ce que** la section transversale (Q) de l'au moins un évidement (5) dans l'élément de bloc profilé (3) varie.

4. Pneumatique (1) selon l'une quelconque des revendications précédentes, **caractérisé en ce qu'**au moins un premier évidement (5.3) est connecté par le biais d'un canal (7) à au moins un autre évidement (5.4) à l'intérieur de l'élément de bloc profilé (3).

5. Pneumatique (1) selon l'une quelconque des revendications précédentes, **caractérisé en ce que** le nombre d'évidements (5) dans au moins un élément de bloc profilé (3) est d'au moins 1, 2, 3, 4, 5, 6, 7, 8, 9, 10 ou va jusqu'à 200.

6. Pneumatique (1) selon l'une quelconque des revendications précédentes, **caractérisé en ce qu'**au moins un premier évidement (5.5) s'étend le long d'une première direction à l'intérieur de l'au moins un élément de bloc profilé (3) et au moins un deuxième évidement (5.6) s'étend le long d'une deuxième direction de l'au moins un élément de bloc profilé (3), l'au moins un premier évidement (5.5) formant avec l'au moins un deuxième évidement (5.6) un angle de 0° à 90°, de préférence de 0° à 45°.

7. Pneumatique (1) selon l'une quelconque des revendications précédentes, **caractérisé en ce que** l'au moins un évidement (5) présente une forme généralement polygonale-concave en section transversale (Q), une forme généralement polygonale renversée en section transversale (Q), une forme polygonale concave équilatérale en section transversale (Q), une forme polygonale renversée équilatérale en section transversale (Q), une forme polygonale renversée à angles égaux en section transversale (Q) ou une forme polygonale renversée régulière en section transversale (Q) ou une forme polygonale convexe régulière en section transversale (Q).

8. Pneumatique (1) selon la revendication précédente, **caractérisé en ce qu'**au moins un élément de bloc profilé (3) présente au moins un premier évidement (5) avec une forme en section transversale (Q) selon la revendication précédente, et au moins un autre évidement (5) avec la même forme ou une forme différente en section transversale (Q) selon la revendication précédente.

9. Pneumatique (1) selon l'une quelconque des revendications précédentes, **caractérisé en ce qu'**une direction dans laquelle un évidement (5) s'étend à l'intérieur d'un élément de bloc profilé (3) forme un angle de 0° à 10° avec une surface de contact avec la chaussée (F) de l'élément de bloc profilé (3).

10. Pneumatique (1) selon l'une quelconque des revendications précédentes, **caractérisé en ce que** l'étendue de l'au moins un évidement (5) s'étend parallèlement ou perpendiculairement à une direction périphérique du pneumatique (1) dans l'au moins un élément de bloc profilé (3).

11. Pneumatique (1) selon l'une quelconque des revendications précédentes, **caractérisé en ce qu'**une première étendue (A1) d'une section transversale (Q) d'au moins un évidement (5) est dans un rapport de longueur d'au moins 1:2 avec une deuxième étendue (A2) de la section transversale (Q) de l'au moins un évidement (5), la première étendue (A1) s'étendant radialement à l'écart de la bande de roulement (2) et perpendiculairement à un axe de rotation du pneumatique (1) et la deuxième étendue (A2) s'étendant parallèlement à une direction périphérique du pneumatique (1) ou parallèlement à un axe de rotation du pneumatique (1).
